Europäisches Patentamt

(19) European Patent Office

Office européen des brevets

(11) Publication number: **0 058 457**
**A1**

(12) # EUROPEAN PATENT APPLICATION

(21) Application number: 82200166.5

(22) Date of filing: 11.02.82

(51) Int. Cl.³: **F 24 H 1/18**
**F 24 J 3/00, F 28 D 1/06**

(30) Priority: 13.02.81 NL 8100725

(43) Date of publication of application:
25.08.82 Bulletin 82/34

(84) Designated Contracting States:
AT BE CH DE FR GB IT LI LU NL SE

(71) Applicant: WAVIN B.V.
251 Händellaan
NL-8031 EM Zwolle(NL)

(72) Inventor: Bontje, Theodorus Petrus Maria
97 de Tak
NL-7701 LG Dedemsvaart(NL)

(72) Inventor: Rensink, Herm Egbert
8 Merelstraat
NL-7771 CG Hardenberg(NL)

(72) Inventor: Lodder, Bernhard
50 Polberg
NL-7772 EW Hardenberg(NL)

(74) Representative: van der Veken, Johannes
Adriaan et al,
EXTERPATENT Postbus 90649 Willem Witsenplein 3 & 4
NL-2509 LP 's-Gravenhage(NL)

(54) A heat exchanger and pipe for use in a heat exchanger.

(57) A heat exchanger comprises a vessel 5a bound by a plastics wall 5 having longitudinal channels 8 opening at each end into a space 9, each space being connected with a stub 17 for feeding and discharging a second fluid.

The vessel 5a is connected with an upper and a lower connecting stub 14 for feeding a first fluid into and discharging said first fluid from said vessel 5a.

The wall 5 of a thermoplastics material such as PVC, comprises longitudinal channels 8 and is made of a tube comprising longitudinal channels 8.

Fig. 1

-1-

## A heat exchanger and pipe for use in a heat exchanger.

The invention relates to a heat exchanger comprising a vessel for the receipt of a first fluid and at least one pipe system through which a second fluid can flow, cooperating with said vessel, the respective ends of said pipes opening into a space bridging each end.

Heat exchangers of this type are generally known and are used for various purposes.

In order to provide heat is has been tried to use an ever increasing amount of external heat sources, more particularly non-continuous sources, while in addition it is required to enlarge the heat storage. With a view to the foregoing the storage needs will increase in relation to the use of said non-continuous heat sources, such as, for example, solar energy. It has been found in practice that in addition to long-term-storage combined with heat pumps such as horizontal and vertical bottom heat exchangers, short-term storage e.g. in a day-and-night-cycle, is going to be used to a considerable extent, more particularly for the storage of hot water.

The invention therefor aims to provide a heat exchanger, more particularly a hot water storage vessel comprising an integrated exchanger, which can be obtained in a simple and cheap manner.

In accordance with the invention this is obtained with a heat exchanger which is characterized in that the pipe system consists

-2-

of a partition provided with longitudinally extending channels.

Said partition constitutes the wall of a pipe, channels provided in said wall discharging into a space of a cap fastened upon an end of the pipe. Preferably the pipe comprising channels in its wall, forms part of the wall of the vessel.

For that purpose preferably use is made of a pipe according to the invention for use in a heat exchanger as described above, which pipe is a plastics pipe the wall of which comprises channels running parallel to the centre line of said pipe. As the vessel is formed by the pipe the wall of which comprises channels and caps provided at both ends of the pipe and bounding the internal space of the latter, a large volume can be used for the one fluid and a small volume for the other fluid. Each cap is preferably composed of two scales, each of said scale comprising an axially directed circumferential flange, the circumferential flange of one scale adjoining the inner circumference of the pipe, the circumferential flange of the other scale adjoining the outer circumference of the pipe. The latter feature allows both scales to be provided with a passage opening into which fits a connecting stub for a pipe conduit for interconnecting the two scales, the scale comprising the flange adjoining the outer circumference of the pipe, being provided with a second passage opening for the receipt of a connecting stub for a pipe conduit being connected to the space between the two scales.

The heat exchanger according to the invention presents many advantages. For example, the total storage volume may be surrounded by heat transferring liquid flowing through the channels in the pipe wall. The internal and external casings around the heat transferring fluid are adapted to one another in order to obtain an increased resistance against internal overpressure of the storage value at a use of material which is as low as possible.

A heat exchanger according to the present invention can be simply obtained by shortening a pipe comprising channels, the length of said heat exchanger and consequently, the storage volume may be variable and adapted to each desired constructional size. Said length may be much greater than the diameter of the vessel, so that at constructional sites the heat exchanger may e.g. be positioned below a roof boarding, in a creeping space, or the like. In addition the heat exchanger may entirely consist of plastics, such as polyvinylchloride so that the same is entirely corrosion-proof. As the front ends of the pipe are similar, simple sealing scales can be used having an extensive adhering surface, due to presence of the circumferential flanges.

A heat exchanger according to the invention used as a storage vessel comprising an integrated exchanger, lends itself very well for use as a solar boiler, wherein the collector fluid flows through the channels in the pipe wall. The storage volume for tap-water or for a heating system, being formed by the internal space of the pipe.

The heat exchanger according to the invention can also be used for a heating vessel/boiler/combination, wherein the central heating fluid may be conveyed through the channels in the pipe wall by means of preferential circuiting.

The invention will be illustrated with respect to the accompanying drawing, wherein

Figure 1 is a perspective, partially cross-sectional view of a heat exchanger according to the invention;

Figure 2 is a cross-sectional view of a tubular side wall of a vessel according to the invention;

Figure 3 is an axial section of part of an end cap illustrating the fastening of the side wall;

Figure 4 is an axial sectional view of an end cap in a second embodiment of the invention;

Figure 5 is an axial sectional view of an end cap in a third.

- 4-

embodiment according to the invention;

Figure 6 is an axial section of part of the end cap of fig. 5, showing the connection of an annular channel to channels in the tubular side wall.

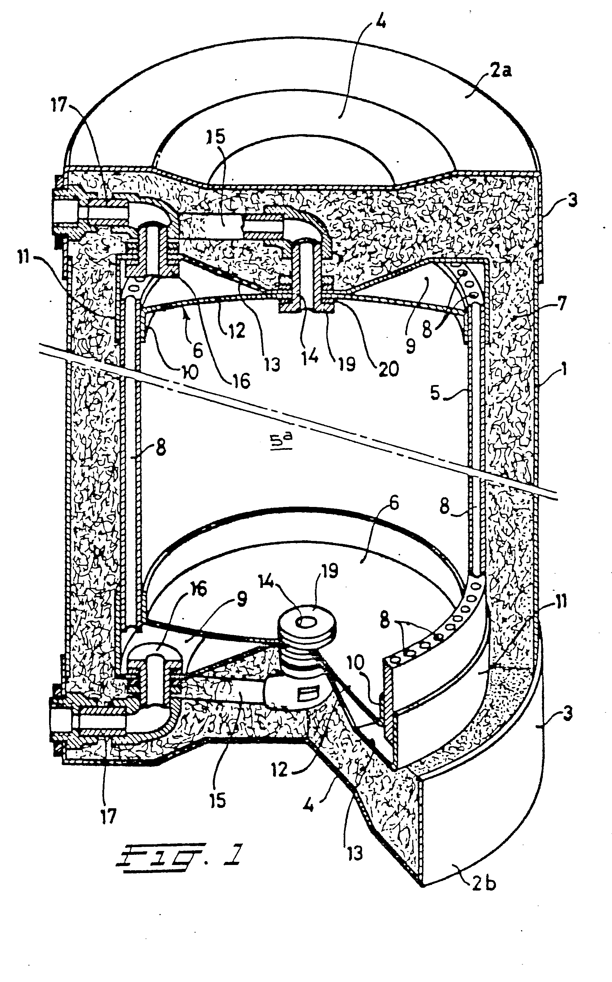

The heat exchanger according to the invention consists of a housing provided with a wall 1 consisting of a plastics pipe, a foil or a coating. Both ends of the so formed tubular casing are closed by end caps 2a, 2b respectively, also consisting of a foil or coating or of an impact resistant plastic. Said end caps are provided with circumferential flanges 3 which may project beyond the tubular casing or pipe 1. In the embodiment of fig. 1 the caps 2a and 2b preferably comprise a central deflected region 4 in order to install the housing in a stable manner.

At distance from the tubular casing 1 and the caps 2a and 2b the heat exchanger proper is accommodated within the housing, said heat exchanger being formed by a tubular side wall 5 comprising two end caps generally denoted by reference numeral 6. The space between the heat exchanger and the pipe forming the tubular casing, is provided with an insulating material. In the case that said insulating material consists of foam, a simple foaming up of this material in the respective space may provide an appropriate anchoring of the heat exchanger in the housing as in this manner a strong sandwhich construction is obtained. The foam has been denoted in the drawing by reference numeral 7.

The heat exchanger further comprises a vessel bound by the tubular side wall 5 for the receipt of a first fluid, while at least one pipe system through which a second fluid can flow, cooperates with said vessel, the respective ends of said pipes opening into a space which bridges each end. The pipe system consists of a partition provided with longitudinally extending . channels 8, said partition consisting of one single integral piece of material. However, this is not imperative as the partition with channels may also be formed from separate parts.

-5-

Said partition is therefore formed by the tubular wall 5 of the heat exchanger comprising the channels 8 which discharge into a space 9 of a cap 6 fastened upon one end of the pipe. From the foregoing it follows that the vessel is formed by the pipe 1, the wall 5 of same comprising channels 8 and by caps 6 provided at both ends of the pipe, which bound the internal space of the latter.

Each cap 6 is composed of two scales 12, 13 respectively, each of said scales comprising an axially directed circumferential flange 10, 11 respectively, the circumferential flange 10 of one scale 12 adjoining the inner circumference of the pipe formed by the wall 5, while the circumferential flange 11 of the other scale 13 adjoins the outer circumference of said pipe. Both scales 12 and 13 are provided with a passage opening into which fits a connecting stub 14 for a pipe conduit 15 and for interconnecting the two scales 12 and 13.

In this manner it is achieved that a strong dual scale is obtained which will be resistant to any internal overpressure in the vessel.

The scale 13 comprising the flange 11 adjoining the outer circumference of the pipe, is provided with a second passage opening for the receipt of a connecting stub 16 for a pipe conduit 17 being connected to the space 9 between the two scales 12 and 13. The scale 13 comprising the circumferential flange 11 which adjoins the outer circumference of the pipe has a central deflection towards the outer scale 12 and adjoins the latter, the two scales' 12 and 13 being connected to one another, by means of the connecting stub 14 for the pipe conduit 15 through the passage openings co-inciding with each other.

For that purpose the connecting stub 14 comprises a head 19 below which a sealing ring 20 is provided, while a nut or snapping ring 21 around the connecting stub 14 is pressed against scale 13 by the additional intermediary of a sealing ring 22.

-6-

The pipe conduits 15 and 17 which are also embedded in the insulating material 7, run into the circumferential flange 10 and are there  provided with a connecting nipple for an ambient conduit, connecting nipple 23 of conduit 17, as illustrated in the drawing.

Said conduit 17 may, for instance, be connected to a circuit of a central heating system or a solar collector, conduit 15 being connected to a tap water conduit. With a view to the described features, a reverse connection may obviously also be effected, dependent on the supplied or consumed quantity of heat.

It is an extremely great advantage of the present invention that a  normal commercial plastics pipe the wall of which comprises channels 8, can be used for the partition constituted by the tubular wall 5. Said commercial pipe need only be shortened to a given length in dependance of the required capacity, in which case the length of pipe 1 can also be shortened, whereas the remaining equipment will always stay the same.

As shown in fig. 2 the tubular wall 5 can have a corrugated surface. For the  sake of clearness the thickness of the material has been much enlarged with regard to the diameter of the tubular wall. Preferably the inner surface 24 is corrugated. In using such a tubular wall a filter can be used in the connection to the caps as will be described later on.

In view of the use of a commercial plastics pipe the wall of which comprises channels 8, which pipe presents great properties of strength and a weight of plastics material which is as low as possible, according to the invention a simple and cheap solution ·is provided for the manufacture of complicated and expensive pipe systems as formally used in heat exchangers.

Fig. 3 shows the insertion of the tubular wall 5 of fig. 1 in an annular channel  25 of a single end cap 6a made of plastics material. In the widened end 26 of said annular channel filling material 27 has been inserted at both sides of the tubular wall 5. The channels 8 open into the annular channel 25 on to which a connecting stub 16 can be arranged (not shown in this figure).

An example of such a single end cap 6a is shown in fig. 4. A connecting stub 14 can be arranged at any desired place on the end cap.

The end cap 6a can be fastened to the end of the tubular wall 5 in any suitable manner, preferably by spinwelding.

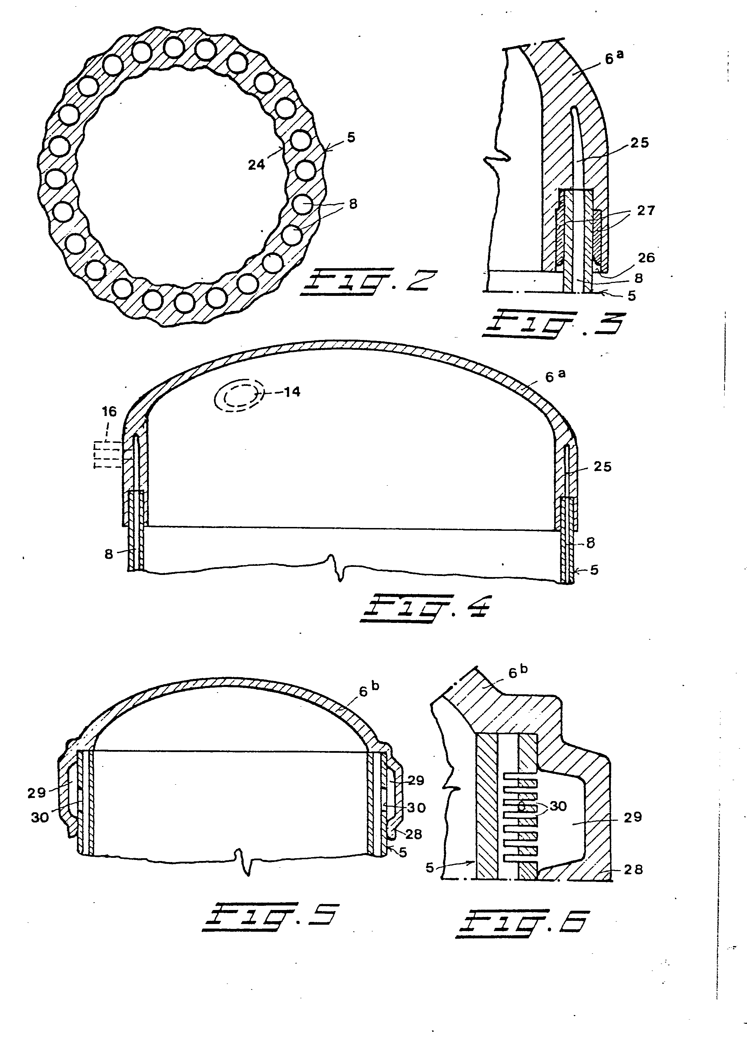

The end cap 6a shown in fig. 5 is also made as a single piece from plastics material, The end cap 6b is only provided with an external axial flange 28, which can rest against the outer circumference of the tubular wall 5. The flange 28 has been provided with a widened part forming an annular channel 29 between the tubular wall 5 and the flange 28.

Openings 30 are provided in the outer surface of the tubular wall 5 in the area of the annular channel 29, forming a connection between this annular channel and the channels 8.

The openings 30 are made in the form of circumferential cuts into the outer surface of the tubular wall 5, as illustrated in the axial section of fig. 6 on an enlarged scale.

The plastics material from which the caps 6, 6a and 6b are made can be provided with particles of magnetic material, owing to which the caps can be fastened to the tubular wall 5 by means of electro welding.

Connecting stubs 14 and 16 can be also arranged in the cap 6b.

It is observed that the reference numerals in the claims are not intended to restrict the scope thereof, but are only denoted for clarification.

-1-

CLAIMS

1. A heat exchanger comprising a vessel 5a for the receipt of a first fluid and at least one pipe system 8 through which a second fluid can flow, cooperating with said vessel, the respective ends of said pipes 8 opening into a space 9 bridging each end, characterized in that said pipe system consists of a partition (5) provided with longitudinally extending channels (8).

2. A heat exchanger according to claim 1, characterized in that the said partition (5) constitutes the wall of a pipe, longitudinally extending channels (8) provided in said wall, discharging into a space (9) of a cap (6) being fastened upon one end of the pipe.

3. A heat exchanger according to claims 1 and 2, characterized in that the pipe (5) the wall of which comprises channels (8) forms part of the wall (5) of the vessel, which comprises caps (6) provided at both ends of the pipe and bounding the internal space of the latter.

4. A heat exchanger according to any one or more of claims 1-3, characterized in that each cap (6) is composed of two scales (12, 13) each of said scales comprising an axially directed circumferential flange (10, 11) the circumferential flange (10) of one scale (12) adjoining the inner circumference of the pipe formed by the wall (5), while the circumferential flange (11) of the other scale (13) adjoins the outer circumference of the pipe.

5. A heat exchanger according to claim 4, characterized in that both scales (12, 13) are provided with a passage opening into which fits a connecting stub (14) for a pipe conduit (15) and for interconnecting the two scales (12, 13).

6. A heat exchanger according to claims 4 and 5, characterized in that the scale (13) comprising the flange (11) adjoining the outer circumference of the pipe, is provided with a second passage opening for the receipt of a connecting stub (16) for a pipe conduit (17) being connected to the space (9) between the two scales.(12, 13).

7. A heat exchanger according to claims 1-4 and any one or more of claims 4-6, characterized in that the pipe comprising the two caps (6) and connections for pipe conduits (15, 17), is disposed in a tubular casing, insulating material (7) being provided in between the walls of the housing and the pipe with the caps.

8. A heat exchanger according to claims 1-3, characterized in that at least the inner surface/of (24) the wall of the pipe (5) has been corrugated.

9. A heat exchanger according to claims 1-3, characterized in that the tubular wall (5) forming the partition has been inserted into an annular channel (25) of an end cap (6a) made from a single piece of plastics material.

10. A heat exchanger according to claim 11, characterized in that the channels (8) in the tubular wall (5) open into the annular channel (25) of the end cap (6a, 6b).

11. A heat exchanger according to claims 1-3 characterized in that an annular channel (29) has been arranged between an end of the tubular wall (5) and a flange (28) of a cap made of plastics material and that openings (30) are provided for connecting the channels (8) in the tubular wall to the annular channel (29).

12. A pipe for use in a heat exchanger according to any one or more of claims 1-11, characterized in that said pipe is a plastics pipe and that the pipe wall is provided with channels (8) running parallel to the centre line of said pipe.

Fig. 1

0058457

FIG. 2

24
5
8

FIG. 3

6ª
25
27
26
8
5

FIG. 4

14
6ª
16
25
8
8
5

FIG. 5

6ᵇ
29
30
29
30
28
5

FIG. 6

6ᵇ
30
29
5
28

**0058457**

## European Patent Office

## EUROPEAN SEARCH REPORT

Application number

EP 82 20 0166

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | US - A - 3 578 074 (STREBELWERK) <br> * Whole document * | 1,2,3 | F 24 H 1/18 <br> F 24 J 3/00 <br> F 28 D 1/06 |
| | -- | | |
| A | BE - A - 823 328 (THOMAS DEFAWES) <br> * Claim 1; figures * | 1,2,3 | |
| | -- | | |
| A | GB - A - 1 175 754 (GESSNER) <br> * Figures * | 1,2,3 | TECHNICAL FIELDS SEARCHED (Int.Cl. 3) |
| | -- | | |
| A | DE - C - 872 211 (DELHOUGNE) <br> * Page 2, lines 41-53; figures 2,3 * | 1,2,3 | FF24 H <br> F 24 J <br> F 28 D <br> F 24 D |
| | -- | | |
| A | US - A - 4 213 498 (VANDENBOSSCHE) <br> * Abstract; figures 3-6 * | 1,3,12 | |
| | ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X | The present search report has been drawn up for all claims

| Place of search | Date of completion of the search | Examiner |
|---|---|---|
| The Hague | 14-04-1982 | VAN GESTEL |

EPO Form 1503.1 06.78